# EUROPÄISCHE PATENTSCHRIFT

(11) **EP 0 944 472 B1**
(45) Veröffentlichungstag und Bekanntmachung des Hinweises auf die Patenterteilung: **11.08.2004**
(21) Anmeldenummer: 97941779.7
(22) Anmeldetag: 07.10.1997
(51) Int. Cl.: B29D 12/00, B29C 70/68, B29C 45/14

(54) **KUNSTSTOFF-FORMTEIL MIT EINER KONSTRUKTIONSSTRUKTUR**
PLASTIC MOLDED PART WITH A CONSTRUCTION STRUCTURE
PIECE MOULEE EN PLASTIQUE AVEC UNE STRUCTURE DE CONSTRUCTION

(30) Priorität: 08.10.1996 CH 244496
(43) Veröffentlichungstag der Anmeldung: 29.09.1999
(73) Patentinhaber: RCC Regional Compact Car AG, 8700 Küsnacht (CH)
(72) Erfinder: TOMKA, Ivan, CH-8700 Zollikon (CH)
(86) Internationale Anmeldenummer: PCT/CH1997/000379
(87) Internationale Veröffentlichungsnummer: WO 1998/015404

(56) Entgegenhaltungen:
- EP-A- 0 687 546
- DE-A- 2 636 557
- FR-A- 1 344 536
- US-A- 4 517 136
- US-A- 4 652 171

## Beschreibung

Die vorliegende Erfindung betrifft ein Kunststoff-Formteil mit Konstruktionsstruktur gemäss Oberbegriff von Anspruch 1, wie ein Behälter, ein Gehäuse, ein Gas- oder Flüssigkeitstank, eine Rohrleitung, eine Fahrzeugzelle, eine Kabine, eine Karosserie oder dergleichen, sowie ein Verfahren zur Herstellung eines derartigen Kunststoff-Formteils mit Konstruktionsstruktur für die Herstellung von Autokarosserien, Transportbehältern, Seilbahnkabinen, Brennstofftanks und ähnlichem, d.h. also von Formteilen welche gleichzeitig eine lasttragende Konstruktionsstruktur bilden.

Die Herstellung von Gehäusen, Kabinen, Karosserien, grösseren Behältnissen, Brennstofftanks und dergleichen erfolgt in der Regel immer noch meist mit metallischen Werkstoffen, wie beispielsweise Metallblechen, Stahlkonstruktionen etc. Infolge des grossen Gewichtes, der Korrosionsanfälligkeit, den relativ teuren Herstellverfahren und des umständlichen Handlings wird aber mehr und mehr versucht, auf leichtere und einfacher verarbeitbare Werkstoffe, wie Kunststoffe bzw. generell Polymere, bzw. auf Kunststoffkonstruktionen, auszuweichen.

So werden beispielsweise für Behälter, Kunststofftanks für Brennstoffe, Rohrleitungen, Fahrzeugzellen etc. sogenannte Wickelverfahren verwendet, wo beispielsweise mit flüssigem Harz getränkte, sogenannte Rovings, Fäden aus Glas oder Kunststofffasern, Gewebebänder usw. um einen Kern in eine Form gewickelt und dort ausgehärtet werden. Einerseits ist die Formgebung nur sehr beschränkt möglich, und anderseits sind die so hergestellten Formkörper kaum nachbearbeitbar. Auch weisen sie keine glatte Oberfläche auf, und um eine ausreichende Festigkeit zu erzielen, müssen relativ grosse Wandstärken gewählt werden.

Gemäss einem weiteren bekannten Verfahren werden in grosse Spritzgussformen Endlosverstärkungsfasern, textile Fasergebilde wie Fasermatten, Platten und Faserhalbzeug und dergleichen lose eingelegt, womit jedoch nur eine sehr beschränkte tragende Funktion erreichbar ist. Oder aber es erfolgt eine Ganzkörper-Faserverstärkung durch Einarbeiten von Kurzfasern in den zu verarbeitenden thermoplastischen Kunststoff. Entweder sind diese Herstellverfahren sehr kompliziert und aufwendig, oder aber die lediglich kurzfaserverstärkten Kunststoffe ergeben bei weitem nicht die erforderliche Festigkeit der herzustellenden Konstruktionsstruktur.

Wieder gemäss einer weiteren Variante werden mittels faserverstärkten Duromeren hergestellte Matten oder Platten mittels Tiefziehverfahren in die erforderliche Form gebracht, worauf die endgültige Aushärtung beispielsweise in einer Pressform oder durch Nachtempern erfolgt. Dies erlaubt jedoch nur eine sehr eingeschränkte Formgebung und nur beschränkte Tragfunktionen. Auch weisen diese Teile keinen akzeptablen Oberflächenfinish auf, und zudem ist in der Regel die Reaktionszeit beim Aushärten zu lange.

Aus der EP 0 687 546 ist ein Hohlkörper mit innenliegendem Stützrahmen bekannt, welcher jedoch keine lasttragende Funktion aufweist. Dieser Hohlkörper ist ein dünnwandiges Gehäuse, das in Blasformtechnik aus einem thermoplastischen Kunststoffschlauch hergestellt ist und das einen Stützrahmen aus Kunststoff-Spritzguss enthält. Der Stützrahmen ist an Anlagepunkten mit dem Gehäuse verbunden. Damit wird z.B. ein Filtergehäuse als Aktivkohlefilter oder ein Resonatorraum zur Dämpfung von Ansauggeräuschen gebildet. Der Stützrahmen dient nur der Formstabilität, er kann jedoch keine lasttragende Funktion erfüllen und weist auch keine Faserverstärkung auf.

Aus der DE 2636 557 ist eine Luftfracht-Containerhaube aus duromeren glasfaserverstärktem Kunststoff Gfk (Glasfaser-Polyester) bekannt, die mit einem eingelegten Portalrahmen versteift ist und welcher eine durchgehende Endlosfaser-Verstärkung an der Frontöffnung enthält, um eine formstabile Frontöffnung zu bilden. Auch diese Containerhaube weist keine lasttragende Struktur auf.

Die US 4652171 offenbart keine Kunststoff-Formteile sondern eine ganz andere, gegensätzliche Produktart, nämlich reine hochfeste Tragstrukturen mit minimalem Gewicht. Hier werden einzelne stabartige, hochfeste faserverstärkte Kunststoffelemente miteinander verbunden, so dass sehr leichte fachwerkartige Tragstrukturen für Flugzeuge erstellt werden können. Dabei werden Stäbe und Rohre in einem komplizierten, sehr aufwendigen und zeitraubenden Verfahren mittels unidirektionalen Fasern, geflochtenen Strümpfen und duromerem Harz miteinander verbunden. Dieses duromere Verbindungsverfahren ist jedoch nicht nur sehr teuer, sondern auch so zeitaufwendig, dass kurze Taktzeiten unmöglich sind.

Es ist daher eine Aufgabe der vorliegenden Erfindung, die Nachteile der bekannten Methoden zu überwinden und ein Kunststoff-Formteil mit Konstruktionsstruktur zu schaffen sowie ein Verfahren zu dessen Herstellung anzugeben, welche auf einfache und kostengünstige Art und Weise und mit kurzen Taktzeiten, unter Verwendung von möglichst leichten Polymerwerkstoffen herstellbar ist und mit welchen ein weiter Bereich von Formgebungen und lasttragenden Funktionen erfüllbar ist.

Erfindungsgemäss wird die gestellte Aufgabe mittels eines Kunststoff-Formteils mit Konstruktionsstruktur nach Anspruch 1 und einem Verfahren nach Anspruch 16 gelöst.

Das Kunststoff-Formteil mit Konstruktionsstruktur wird gebildet aus einfachen einzelnen hochfesten faserverstärkten Strukturelementen, welche zu einer tragenden Struktur zusammengesetzt und miteinander verbunden sind und welche eine mindestens in Teilen dieser tragenden Struktur von einer das Formteil bildenden Polymermasse umgossen ist. Damit werden auf einfache Art aus relativ kostengünstiger Meterware Strukturelemente und Konstruktionsstrukturen in beliebiger Form erzeugt und wobei die gewünschte Formgebung und Oberfläche auf einfache Art durch Giessen oder Spritzen der Polymermasse erzeugt wird. Zudem sind damit kurze Taktzeiten erreichbar. Im Prinzip können damit weitgehende beliebige Flächenformen und lasttragende Funktionen der integrierten tragenden Struktur erzeugt werden. Vollständiges Umgiessen bzw. Umspritzen der tragenden Struktur mit der Polymermasse ergibt eine vollständig geschützte, glatte Oberfläche. Beispielsweise für grosse Raumgitter-Strukturen können aber auch nur Teilbereiche, vor allem an Verbindungsstellen der Strukturelemente, von der Polymermasse umgossen sein.

Die abhängigen Patentansprüche betreffen vorteilhafte Weiterbildungen der Erfindung bezüglich Materialien, Materialkombinationen, Verbindungen und Aufbau von tragenden Strukturen und Formteilen mit besonders günstigen Eigenschaften.

Als Verstärkungsfasern für diese, die tragende Struktur bildenden Strukturelemente eignen sich insbesondere Endlosfaserverstärkungen aus Glasfasern, Kohlenstoff-, Polypropylen-, Polyethylen-, Aramid- oder anderen hochfesten Polymerfasern. Als Matrix für die Verstärkungsfasern eignen sich vorzugsweise Thermoplaste wie Polyamid (PA), Polypropylen (PP), Polyethylentherephthalat (PET), Polybutylentherephthalat (PBT), Polycarbonat (PC), Polyimid (PI), Polyacrylate, Polyphenylensulfid (PPS), Polyetheretherketon (PEEK).

Daneben eignen sich aber mindestens teilweise auch Duromermaterialien, wie beispielsweise Polyurethan (PUR), ungesättigte Polyesterharze, Epoxidharze, Phenolharze, Aminoplaste oder aber gegebenenfalls Novolackharze.

Bei diesen, die tragende Struktur bildenden Strukturelementen kann es sich beispielsweise um längsorientierte Gebilde wie Stangen, Rohre, Längsprofile, wie T-Profile, L-winkel und um flächige Gebilde wie Platten, Matten, Waben, Gitter und dergleichen handeln. Diese Strukturelemente können generell mittels in der Kunststofftechnik üblichen Herstellmethoden produziert werden, vorzugsweise mittels Pultrusion, Extrusion, Stranggiessen, Strangpressen oder Kalandrieren. Bevorzugt werden diese Strukturelemente durch Zuschneiden, Nachbearbeiten und Konfektionieren von "endlos"-Material hergestellt.

Zur Herstellung der tragenden Struktur werden die einzelnen Strukturelemente durch Stecken, Schrauben, Kleben, Schweissen und dergleichen miteinander verbunden, wobei jeweils im Verbindungsbereich entsprechende Kupplungs- oder Verbindungselemente angeordnet werden können.

Die einzelnen Strukturelemente können mehrschichtig aufgebaut werden, mit mindestens einem hochfesten Kern und einer äussersten Schicht, welche vorzugsweise kompatibel ist mit der das Element unmittelbar umgebenden Polymermasse bzw. welche äusserste Schicht auf der das Element unmittelbar umgebenden Polymermasse gut haftet bzw. sich mit dieser gut verbinden oder vermischen lässt. Gute Haftung zwischen Strukturelementen und thermoplastischer Polymermasse wird erreicht durch kompatible Polymermaterialien, welche ineinander diffundieren und sich dadurch mikroskopisch verbinden, oder durch chemische Bindungen.

Gemäss einer bevorzugten Ausführungsvariante ist die äusserste Schicht der einzelnen Strukturelemente bzw. deren Oberfläche wenigstens nahezu identisch mit der unmittelbar das Element umgebenden Polymermasse. Dabei sind auch Polymerblends einsetzbar.

Die das Formteil oder die Konstruktionsstruktur bildende Polymermasse umfasst mindestens teilweise ein thermoplastisches Polymer, wie Polyamid (PA), Polypropylen (PP), Polyethylentherephthalat (PET), Polybutylentherephthalat (PBT), Polycarbonat (PC), Polyimid (PI), Polyacrylate, Polyphenylensulfid (PPS), Polyetheretherketon (PEEK). Im Prinzip werden möglichst gleiche Polymere wie für die thermoplastische Matrix oder die Beschichtung der Strukturelemente eingesetzt. Dabei kann die Polymermasse mehrschichtig ausgebildet sein mit vom Element zur Oberfläche des Formteils oder der Konstruktionsstruktur hin abnehmender Steifigkeit und Festigkeit. Dabei ist es auch möglich, dass die Polymermasse wenigstens bereichsweise geschäumt oder eingefärbt ist.

Die abnehmende Steifigkeit und Festigkeit vom Strukturelement zur äusseren Oberfläche der Polymermasse ist dann wichtig, um bei auftretenden Beschädigungen bzw. auftretender Deformation von Formteil mit Konstruktionsstruktur eine möglichst hohe Energieaufnahme zu garantieren. Insbesondere bei der Herstellung von Fahrzeugzellen, Automobilkarosserien, Kabinen und dergleichen, ist es wichtig, dass die, die Karosserie bildenden Formteile mit Konstruktionsstruktur bei sogenannten "crash"-Tests eine möglichst grosse Energieaufnahme ergibt, um beispielsweise einer in einem Automobil oder einer Kabine befindlichen Person grösstmöglichen Schutz bieten zu können.

Die Erfindung wird nun anschliessend anhand von Ausführungsbeispielen unter Bezug auf die beigefügten Figuren näher erläutert.

Dabei zeigen:
- Fig. 1: Spannungs/Dehnungsdiagramme von verschiedenen eingesetzten Materialien;
- Fig. 2, 2a: einen Flüssigkeitstank als Beispiel eines erfindungsgemässen Kunststoff-Formteils mit Konstruktionsstruktur;
- Fig. 3a-c: Beispiele von Verbindungen, Verbindungselementen und -bereichen der tragenden Struktur;
- Fig. 4: einen Behälter mit kistenförmiger tragender Struktur;
- Fig. 5: eine zylinderförmige tragende Struktur, z.B. als Rundbecken;
- Fig. 6: eine Seilbahnkabine;
- Fig. 7: eine Fahrzeugzelle mit Karosserieteilbereichen.

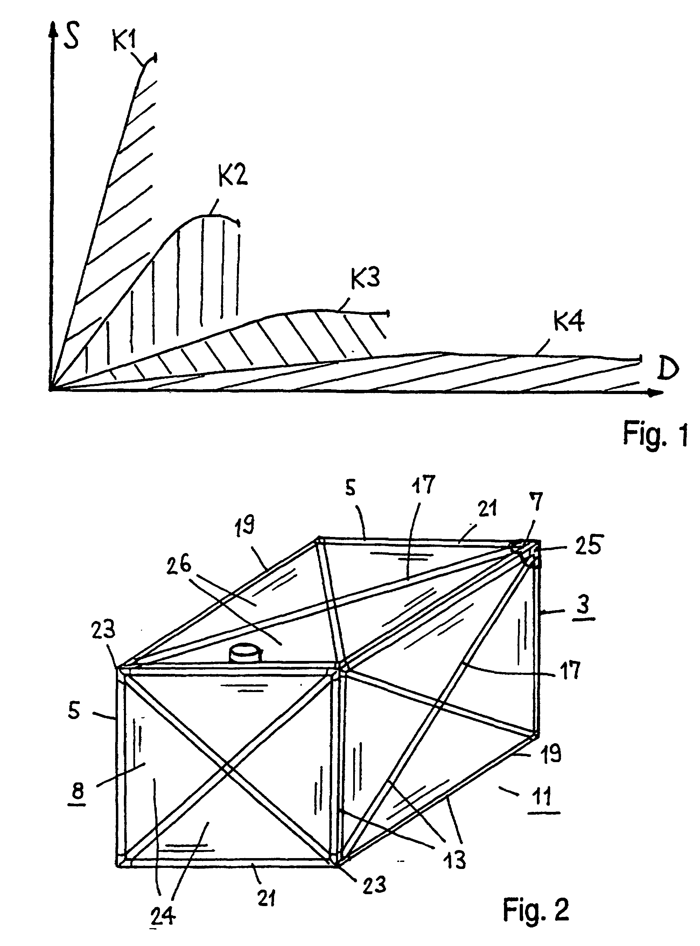

In Fig. 1 ist ein Spannungs/Dehnungsdiagramm dargestellt, anhand welchem obiger Sachverhalt dargelegt werden soll.

Die Kurve K1 zeigt das Spannungs/Dehnungsverhalten S(D) eines hochfesten und hochsteifen Materials, eines Strukturelements, wie beispielsweise eines mit Endlosfasern verstärkten Matrix-Materials, beispielsweise ein mit 50% Kohlenstofffasern verstärktes Epoxidharz. Kurve K2 zeigt ein mittels Kurzfasern verstärktes Thermoplastmaterial. Die Kurve K3 zeigt das S(D)Verhalten des unverstärkten Thermoplastmaterials und die Kurve K4 das Spannungs/Dehnungsverhalten eines sogenannten Strukturschaumes, wie beispielsweise eines Polycarbonatschaumes.

Die Energieaufnahme der einzelnen Materialien bis zum Bruch wird durch die unter der Kurve liegende, schraffiert dargestellte Fläche repräsentiert. Es ist also wichtig, dass die Fläche unter den einzelnen Kurven möglichst gross ist, was sich dann ergibt, wenn ein möglichst abgestuftes Spannungs/Dehnungsverhältnis vom Kern der einzelnen Strukturelemente (z.B. Kurve K1) bis zur äusseren Oberfläche des Formteils (z.B. Kurve K3, K4) gewählt wird. Mit anderen Worten ist es vorteilhaft, wenn die Steifigkeit der gewählten Materialien vom Kern der einzelnen Strukturelemente gegen die Oberfläche des Formteils hin abnimmt. Allerdings ist es natürlich auch wichtig, dass die einzelnen gewählten Materialien miteinander kompatibel sind, damit an den Grenzflächen bei der Energieaufnahme keine Ablösung stattfindet bzw. kein Bruch auftritt.

Für die Herstellung der Formteile mit Konstruktionsstrukturen wird zunächst von der Herstellung der einzelnen Strukturelemente ausgegangen. Dabei wird beispielsweise von Pultrusion oder Endlosextrusion von Rohren, Stäben, Profilen und dergleichen ausgegangen, welche Endlosmaterialien anschliessend in die gewünschte Länge unterteilt werden. Thermoplastische endlosfaserverstärkte Strukturelemente werden z.B. durch Pultrusion hergestellt. Bei Extrusion werden beispielsweise endlosfaserverstärkte duromere Materialien extrudiert, welche entweder durch entsprechende Zusätze rasch aushärten oder welche durch Nachbehandeln, wie Nachtempern, UV-Behandlung und dergleichen, gehärtet werden. Es ist auch möglich, diese Endlosmaterialien durch Koextrusion herzustellen, indem, wie vorab beschrieben, die Strukturelemente mehrschichtig ausgebildet sind. Der innere Kern kann beispielsweise aus dem faserverstärkten duromeren Material bestehen, währenddem die äusserste Schicht mindestens teilweise aus einem thermoplastischen Material gefertigt ist, wie beispielsweise aus Polypropylen, Polycarbonat und dergleichen. Wichtig ist natürlich, dass die einzelnen Materialschichten untereinander gut haften bzw. kompatibel sind.

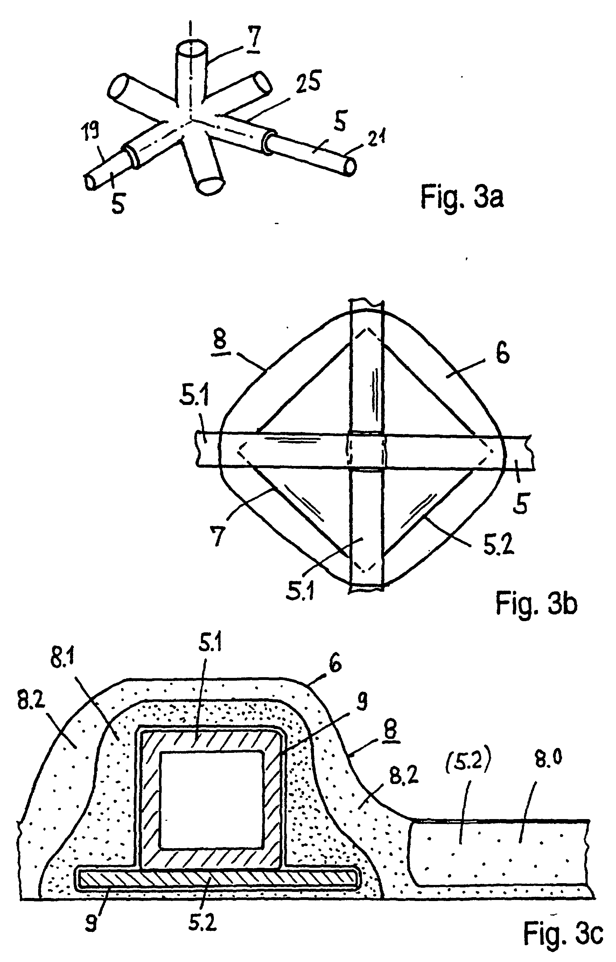

Gute Haftung kann einerseits erreicht werden durch Adhäsion an der Grenzschicht bzw. Grenzfläche oder durch Diffusion der Moleküle in den beiden Hälften beidseits der Grenzschicht ineinander. Letzteres kann beispielsweise erreicht werden, indem Duromere an der Oberfläche noch nicht vollständig ausgehärtet sind oder indem anschmelzbare Thermoplaste an der Oberfläche angeordnet werden. Gute Haftung wird aber auch erzielt, indem an der Grenzschicht eine chemische Reaktion zwischen den beiden die Grenzschicht bildenden Polymeren erfolgt bzw. zwischen den Molekülen der Polymere. Schlussendlich möglich ist es auch, zwischen den beiden Polymeren eine haftvermittelnde-Verbindungsschicht (9 in Fig. 3c) anzuordnen.

Nach Herstellen der einzelnen Strukturelemente, wie beispielsweise Stäbe, Platten, Rohre, T-Profile usw., werden diese Elemente zur tragenden Struktur zusammengesetzt. Dies kann beispielsweise durch Zusammenstecken mittels verbindungselementen geschehen, welche Verbindungselemente Steckpartien, Schraubpartien, Einrastpartien und dergleichen aufweisen können. Diese Verbindungselemente können entweder starr sein oder aber auch gelenkig ausgebildet sein, so dass die erzeugte tragende Struktur entweder steif ist oder aber über eine gewisse Gelenkigkeit verfügen kann. Das Zusammenfügen ist aber auch direkt möglich, indem die einzelnen Strukturelemente miteinander verklebt, verschweisst, verschraubt usw. werden. Wichtig ist in jedem Fall, dass mindestens ein Teil der Strukturelemente der tragenden Struktur miteinander verbunden ist.

Nach dem Herstellen der tragenden Struktur wird diese in eine Spritzgussform bzw. eine Giessform eingelegt, worauf die thermoplastische Polymermasse eingespritzt bzw. eingegossen wird. Dabei ist es nun wesentlich, dass die einzuspritzende bzw. einzugiessende Polymermasse kompatibel ist mit der äussersten Schicht der jeweiligen Strukturelemente der tragenden Struktur bzw. dass die Oberfläche der tragenden Struktur sich gut mit der Polymermasse verbindet. Da es nun möglich ist, die Polymermasse für das Bilden des Formteils bzw. der Konstruktionsstruktur wiederum mehrschichtig auszubilden, kann nach erfolgtem Aushärten der eingespritzten bzw. eingegossenen Polymermasse entweder die nun ummantelte tragende Struktur in eine weitere Spritzgussform bzw. Giessform eingegeben werden, oder aber das Volumen der vorliegenden Spritzgussform bzw. Giessform kann dadurch vergrössert werden, indem in den Wandungen Schieberelemente vorgesehen sind. Es handelt sich dabei um sogenannte Mehrfach-Werkzeuge, welche das Einspritzen bzw. Eingiessen von mehreren Polymermassen zulassen zur Bildung eines mehrschichtigen Formteils.

Auf diese Art und Weise wird es auch möglich, die oben beschriebene Veränderung der Steifigkeit von innen nach aussen zu bewerkstelligen, indem beispielsweise gegen aussen hin Polymermaterialien, wie beispielsweise Polyethylen-Polypropylen Copolymere, Polyester wie PBT oder Topas ((polymerisierte zyklische Vinylmonomere) eingespritzt werden können, welche eine relativ niedrige Steifigkeit aufweisen und zudem einen sehr guten Oberflächenfinish ergeben, damit das schliesslich hergestellte Formteil bzw. die Konstruktionsstruktur nicht nachgearbeitet werden muss. Dadurch wird es auch möglich, die äusserste Schicht einzufärben, damit die Notwendigkeit der Lackierung des schlussendlich hergestellten Formteils bzw. der Konstruktionsstruktur entfällt.

Um ein möglichst leichtes Formteil mit Konstruktionsstruktur zu erhalten, ist es vorteilhaft, die Polymermasse wenigstens teilweise geschäumt auszubilden. Geeignet sind beispielsweise sogenannte Strukturschäume beispielsweise aus Polycarbonat, Poyurethan oder Polyester wie PBT oder Topas, welche hervorragende Gewichts-, Festigkeits- und Härteverhältnisse aufweisen, d.h. welche bei geringem Gewicht eine relativ hohe Oberflächenfestigkeit aufweisen.

Der grosse Vorteil bei der Verwendung von polymeren Materialien gemäss der vorliegenden Erfindung liegt darin, dass, wie bereits oben erwähnt, die Oberfläche des hergestellten Formteils mit Konstruktionsstruktur nicht nachbearbeitet werden muss. Auch können spezielle Oberflächeneffekte erzielt werden, wie beispielsweise das Polymer einzufärben, womit die Lackierung entfällt. Auch kann der sogenannte "Acryllack-touch" imitiert werden, oder aber es können Oberflächenstrukturen beim Spritzgiessen bzw. Eingiessen eingeformt werden.

Aber auch später ergeben sich weitere grosse Vorteile, indem derart hergestellte Formteile, wie beispielsweise Karosserien, nicht rosten bzw. korrodieren können. Auftretende Kratzer sind kaum sichtbar und führen nicht zum Rosten der Karosserie. Kratzer können auch nachgeschliffen werden, wodurch sie nicht mehr sichtbar sind.

Ein weiterer Vorteil liegt darin, dass derartige Formteile, wie beispielsweise Gehäuse, Tanks, Karosserien und dergleichen, leicht rezyklierbar sind, indem die Polymermasse mittels Schmelzen wieder granuliert werden kann, währenddem die faserverstärkten Strukturelemente erneut beispielsweise als Faserverstärkung Verwendung finden können.

Die Idee der vorliegenden Erfindung liegt darin, dass zunächst ein Gerüst bzw. die tragende Struktur aus sogenannter Meterware hergestellt wird bzw. dass die einzelnen Strukturelemente dieses Gerüstes auf einfache und billige Art und Weise herstellbar sind, worauf die Elemente beispielsweise mittels Robotern zusammengebaut werden.

Im Gegensatz zur bekannten üblichen Ganzkörper-Faserverstärkung mit eingelegten Matten oder den eingangs erwähnten Wickelverfahren werden erfindungsgemäss die Strukturelemente auf einfachste Art und Weise zur tragenden Struktur als Gerüst zusammengebaut, welches Gerüst aber eine wesentlich höhere Festigkeit und Formbeständigkeit des schlussendlichen Formteils garantiert. Selbstverständlich ist es auch gemäss der vorliegenden Erfindung moglich, flächige Strukturelemente wie Matten- oder Wabenstrukturen zu verwenden, wesentlich aber ist, dass diese Matten- oder Wabenstrukturen untereinander und mit weiteren Strukturelementen verbunden werden.

Fig. 2 zeigt einen Flüssigkeitstank 11 als Beispiel eines erfindungsgemässen Kunststoff-Formteils mit Konstruktionsstruktur, wobei die Wandungen transparent dargestellt sind, damit die tragende Struktur 3 sichtbar wird. Diese tragende Struktur 3 besteht aus einem Raumgitterrahmen 13 mit Diagonalstäben 17 sowie Langsstäben 19 und Querstäben 21 als Strukturelemente 5, welche zur Verfestigung bzw. Verstrebung der einzelnen Wandungen dienen. In den jeweiligen Ecken 23 des Flüssigkeitstankes 11 sind die einzelnen Strukturelemente bzw. Stäbe miteinander verbunden, was beispielsweise mittels eines Steckverbindungsteils 25 als Verbindungselement 7 erfolgen kann, wie in Fig. 3a dargestellt ist. Bei den Längsstäben 17, 19 und 21 kann es sich beispielsweise um mittels Kohlenstofffasern verstärkte Polyurethanharzstäbe handeln, welche oberflächenbeschichtet bzw. oberflächenbehandelt sind, um eine bessere Haftung der die einzelnen Stäbe umgebenden Polymermasse sicherzustellen. Diese Strukturelemente 3 können auch andere Profilformen aufweisen, z.B. als Rohre ausgebildet sein. Mittels der erwähnten Polymermasse 8 werden dann auch die Zwischenräume 24 und 26 als Wandungen zwischen den Stäben, beispielsweise mittels Spritzgiessens, ausgefüllt.

Die Fig. 3a - 3c illustrieren Verbindungen, Verbindungselemente (7) und Verbindungsbereiche 6 von verschiedenartigen stabartigen, längsorientierten (5.1) und flächigen (5.2) Strukturelementen, welche in geeigneter Auswahl und Zusammenstellung die tragende Struktur 3 bilden.

Fig. 3a zeigt als Verbindungselement 7 ein Steckverbindungsteil 25 mit welchem z.B. die Stäbe 17, 19, 21 von Fig. 2 durch Einstecken und Einkleben verbunden werden.

Fig. 3b zeigt in Aufsicht eine Verbindung von zwei sich kreuzenden Längsprofilen, z.B. in Form von Rechteckrohren als Strukturelemente 5, welche auf eine Platte als flächiges Verbindungselement 7 aufgeklebt sind und wobei das Ganze z.B. durch eine faserverstärkte Polymermasse 8 als Teilbereichsformteil umgeben und zusammengehalten ist. Dieses Formteil bildet hier einen Verbindungsbereich 6.

Fig. 3c illustriert im Querschnitt eine Verbindung eines quadratischen Rohrprofils als längsorientiertes Strukturelement 5.1, welches auf eine Platte als flächiges Strukturelement 5.2 aufgeklebt oder aufgeschweisst ist. Daneben schliesst sich ein Wandbereich an, welcher z.B. aus Polymermasse 8 mit geschäumten Teilbereichen 8.0 bestehen kann oder welcher auch weitere flächige Strukturelemente 5.2, wie Gitter oder Waben, enthalten kann. Die umgebende formbildende Polymermasse 8 bildet auch hier einen verstärkenden Verbindungsbereich 6. Dabei kann die Polymermasse auch aus zwei oder mehr Schichten, 8.1, 8.2, bestehen. Zudem ist hier eine Verbindungsschicht 9 zur Vermittlung einer sehr starken Verbindung zwischen Strukturelementen und Polymermasse auf den Strukturelementen 5.1 und 5.2, z.B. deren äusserste Schicht bildend, vorgesehen. Die umspritzte Polymermasse besteht z.B. aus einer stärkeren faserverstärkten Schicht 8.1, auf welche anschliessend eine weitere unverstärkte Polymerschicht 8.2 aufgespritzt ist. Deren Spannungs/-Dehnungsverhalten entspricht dabei den Kurven von Fig. 1: 8.1 = K2, 8.2 = K3, sowie Polymerschaum 8.0 = K4.

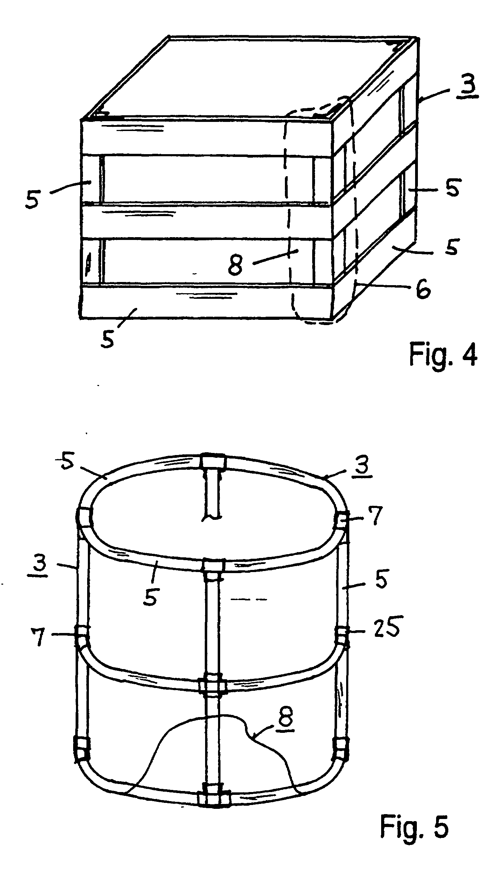

Die Wandungen eines Behälters können beispielsweise auch mit lattenförmigen, d.h. flachen Strukturelementen als Verstrebungen gestützt sein, wie dies beispielsweise beim kistenförmigen Behälter von Fig. 4 dargestellt ist. Wesentlich dabei ist, dass die einzelnen Strukturelemente, welche die tragende Struktur bilden, beispielsweise mittels Pultrusion oder Extrusion "endlos" herstellbar sind, aus endlosfaserverstärktem thermoplastischem oder duromerem Material. Für den Fall, dass besonders hochfeste, steife und einen sehr hohen Modul aufweisende Strukturelemente erforderlich sind, kann ein besonders hoher Anteil der Endlosfaserverstärkung von z.B. 50 - 60 Vol% eingesetzt werden. Es auch vorteilhaft sein, wenigstens teilweise sogenannte Novolacke zu verwenden, welche eine höhere Vernetzungsdichte ergeben als die handelsüblichen Duromere.

Bei den Endlosfaserverstärkungenn kann es sich um sämtliche eingangs erwähnte Fasern handeln, wobei diese vorzugsweise vor dem Einarbeiten in das Matrixpolymer substruiert sein müssen, so dass deren Oberfläche gut benetzbar ist durch das diese Fasern einschliessende Polymer. Allerdings handelt es sich dabei um eine bereits bestens bekannte Technik, da an sich das Verstärken von Thermoplasten und Duromeren, beispielsweise mit Glas-, Kohlenstofffasern, Aramidfasern und dergleichen, im Stand der Technik bestens bekannt ist.

Schliesslich wäre es aber auch möglich, die einzelnen Wandungen zusätzlich zu den Verstrebungselementen mit Wabenstrukturen in den Zwischenräumen 24, 26 zu versehen, wesentlich dabei ist, dass diese Wabenstrukturen mit den anderen Strukturelementen 17, 19, 21 (in Fig. 2) verbunden sind.

Ein weiteres Beispiel einer derartigen tragenden Struktur 3 ist in Fig. 5 dargestellt mit gebogenen, längsorientierten Profilen oder Rohren als Strukturelemente 5 und mit Verbindungselementen 7, 25, beispielsweise für die Bildung einer Wandung eines Bassins, einer Rohrwandung, eines Rohres mit sehr grossem Durchmesser, eines Drucktanks usw.

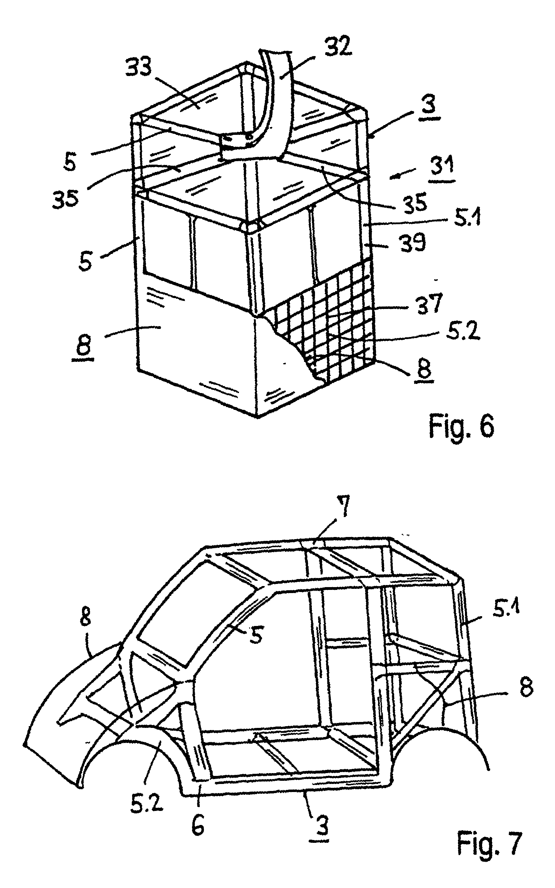

In Fig. 6 wiederum ist eine Seilbahnkabine 31 dargestellt, deren lasttragendes Grundgerüst aus einer erfindungsgemässdefinierten, tragenden Struktur 3 gebildet wird. Dabei sind insbesondere an die Festigkeit des Bodens und der Dachkonstruktion, an welcher ein Tragarm 32 befestigt ist, erhöhte Anforderungen gestellt, weshalb beispielsweise im Dach 33 Strukturelemente als Verstärkungselemente 35 angeordnet sind, welche massiver dimensioniert sind als beispielsweise Verstärkungselemente in den Seitenwandungen. So ist es beispielsweise auch möglich, als Verstärkungselement in den Seitenwandungen relativ leicht dimensionierte, gitterartige Strukturen 37 als weiteres Beispiel flächiger Strukturelemente 5.2 zu verwenden, welche in einem Rahmen 39 der tragenden Struktur 3 eingelassen befestigt sind.

In Fig. 7 ist als weiteres Beispiel eine Fahzeugzelle 41 eines Automobils, mit einer hochfesten tragenden Struktur dargestellt. Diese besteht aus starken längsorientierten Strukturelementen 5.1 verbunden mit flächigen Teilen 5.2, wobei Teilbereiche der tragenden Struktur mit der umgebenden Polymermasse 8 Karosserieteile bilden können. In dieser weise ist auch eine selbsttragende Kunststoffkarosserie herstellbar.

Bei den in den Fig. 2 bis 7 dargestellten möglichen Anwendungen der vorliegenden Erfindung handelt es sich selbstverständlich nur um Beispiele, welche auf x-beliebige Art und Weise abgeändert, modifiziert oder ergänzt werden können. Insbesondere sind die dargestellten Verstärkungselemente bzw. Strukturelemente 5 zur Bildung der erfindungsgemässen tragenden Strukturen 3 lediglich gewählt, um die vorliegende Erfindung näher zu erläutern. Es ist natürlich möglich, anstelle von Rohren bzw. Stäben, Seitenprofilen, Netzen und Latten, wie in den Fig. 2 bis 7 dargestellt, auch andere Verstärkungselemente, wie beispielsweise T-Profile, U-Profile, L-Winkel usw., zu verwenden oder Laminate, Matten, Waben und dergleichen als flächige Strukturelemente.

Auch die dargestellten Anwendungsbeispiele dienen lediglich zur Erläuterung der Erfindung, selbstverständlich kann die erfinderische Idee auch für die Herstellung irgendwelcher anderer Gehäuse, Behälter, Kabinen, Container, Karosserien usw. verwendet werden, welche lasttragende Funktionen erfüllen müssen.

Wesentlich ist, dass für die Herstellung eines Formteils mit Konstruktionsstruktur, im wesentlichen bestehend aus einem polymeren Material, zunächst eine tragende Struktur gebildet wird, welche anschliessend mit dem das Formteil und die Konstruktionsstruktur bildenden polymeren Material mindestens in Teilbereichen ummantelt bzw. eingehüllt wird. Dabei können sowohl die einzelnen Strukturelemente, welche die tragende Struktur bilden, wie auch die Polymermasse, welche das Formteil schlussendlich bildet, einoder mehrschichtig sein bzw. aus mehreren Komponenten bestehen.

## Patentansprüche

1. Kunststoff-Formteil mit Konstruktionsstruktur, mit einer thermoplastischen Polymermasse (8), welche das Formteil bildet,
und mit einer lasttragenden Struktur, welche in das Formteil integriert und von der thermoplastischen Polymermasse (8) umgeben ist, **gekennzeichnet durch** eine lasttragende Struktur (3) mit einer Endlosfaser-Verstärkung,
welche aus mehreren einzelnen, miteinander verbundenen, hochfesten Strukturelementen (5) besteht
und welche Strukturelemente (5) eine Endlosfaser-Verstärkung in einer polymeren Matrix aufweisen,
wobei alle Verbindungsstellen zwischen den einzelnen Strukturelementen (5) von der thermoplastischen Polymermasse (8) als Verbindungsbereiche (6) umgeben und zusammengehalten werden
und wobei die polymere Matrix der Strukturelemente (5) mit der umgebenden thermoplastischen Polymermasse (8) haftend verbunden ist.

2. Formteil Anspruch 1, **dadurch gekennzeichnet, dass** die Strukturelemente (5) mit Endlosfasern aus Glas, Kohlenstoff, Aramid, LC-Polymer oder mit anderen hochfesten Polymerfasern verstärkt sind.

3. Formteil nach einem der Ansprüche 1 oder 2, **dadurch gekennzeichnet, dass** die Strukturelemente (5) als Matrixmaterial einen Thermoplasten aufweisen, wie Polyamid (PA), Polypropylen (PP), Polyethylentherephthalat (PET), Polybutylentherephthalat (PBT), Polycarbonat (PC), Polyimid (PI), Polyacrylate, Polyphenylensulfid (PPS), Polyetheretherketon (PEEK).

4. Formteil nach einem der Ansprüche 1 oder 2, **dadurch gekennzeichnet, dass** die Strukturelemente (5) als Matrix ein duromeres Material aufweisen, wie Polyurethan PUR, ungesättigter Polyester, Epoxidharze, Phenolharze, ein Aminoplast oder ein Novolackharz.

5. Formteil nach einem der vorangehenden Ansprüche, **dadurch gekennzeichnet, dass** als Strukturelemente (5) zur Bildung der tragenden Struktur (3) langsorientierte Gebilde (5.1) wie Stangen, Rohre, Stäbe, Profile und flächige Gebilde (5.2) wie Platten, Laminate, Waben, Gitter und dergleichen eingesetzt sind.

6. Formteil nach einem der vorangehenden Ansprüche, **dadurch gekennzeichnet, dass** die Strukturelemente (5) zur Bildung der tragenden Struktur (3) mittels Verbindungselementen (7) miteinander verbunden sind.

7. Formteil nach einem der vorangehenden Ansprüche, **dadurch gekennzeichnet, dass** die einzelnen Strukturelemente (5) zur Herstellung der tragenden Struktur (3) mittels Extrusion, Pultrusion, Stranggiessen oder anderen kontinuierlichen kunststoffverarbeitenden Verfahren hergestellt sind, wobei die einzelnen Elemente aus dem Endlosmaterial durch Schneiden, Stanzen, Fräsen, Sägen und anschliessendes Nachbearbeiten hergestellt sind.

8. Formteil nach einem der vorangehenden Ansprüche, **dadurch gekennzeichnet, dass** die einzelnen Strukturelemente (5) zur Bildung der tragenden Struktur mehrschichtig aufgebaut sind mit einem hochfesten Kern und einer Verbindungsschicht als äusserster Schicht, welche kompatibel ist mit der das Element unmittelbar umgebenden Polymermasse (8), so dass Strukturelement und Polymermasse durch die Verbindungsschicht (9) fest haftend miteinander verbunden sind.

9. Formteil nach einem der vorangehenden Ansprüche, **dadurch gekennzeichnet, dass** die Oberfläche des Strukturelementes (5) soweit kompatibel ist, dass eine Diffusion an der Kontaktfläche zur umgebenden Polymermasse (8) stattfindet.

10. Formteil nach einem der vorangehenden Ansprüche, **dadurch gekennzeichnet, dass** die Polymermasse (8) ein thermoplastisches Polymer aufweist, wie Polyamid (PA), Polypropylen (PP), Polyethylentherephthalat (PET), Polybutylentherephthalat (PBT), Polycarbonat (PC), Polyimid (PI), Polyacrylate, Polyphenylensulfid (PPS), Polyetheretherketon (PEEK).

11. Formteil nach einem der vorangehenden Ansprüche, **dadurch gekennzeichnet, dass** die Polymermasse (8) eine Kurz- oder Langfaserverstärkung aufweist.

12. Formteil nach einem der vorangehenden Ansprüche, **dadurch gekennzeichnet, dass** die Polymermasse mehrschichtig (8.1, 8.2) ausgebildet ist mit vom Strukturelement (5) zur Oberfläche hin abnehmender Festigkeit und Steifigkeit des Polymermaterials in den jeweiligen Schichten.

13. Formteil nach einem der vorangehenden Ansprüche, **dadurch gekennzeichnet, dass** die Polymermasse (8) wenigstens teilweise geschäumt ist (8.0).

14. Formteil nach einem der vorangehenden Ansprüche, **dadurch gekennzeichnet, dass** die Polymermasse (8) wenigstens teilweise eingefärbt ist.

15. Formteil nach einem der vorangehenden Ansprüche, **dadurch gekennzeichnet, dass** mehrere Kunststoff-Formteile mit den integrierten lasttragenden Strukturen (3) eine Fahrzeugzelle (41) bilden.

16. Verfahren zur Herstellung von einem Kunststoff-Formteil mit einer Konstruktionsstruktur, mit einer thermoplastischen Polymermasse (8), welche das Formteil bildet,
und mit einer aus mehreren einzelnen hochfesten Strukturelementen (5) bestehenden lasttragenden Struktur (3), wobei die Strukturelemente (5), welche
eine Endlosfaser-Verstärkung in einer polymeren Matrix aufweisen, zugeschnitten und anschliessend miteinander verbunden werden,
so dass eine endlosfaserverstärkte lasttragende Struktur (3) gebildet wird, welche in eine Giessform eingelegt wird,
wobei anschliessend eine geschmolzene thermoplastische Polymermasse (8) in die Giessform eingefüllt wird
und alle Verbindungsstellen zwischen den einzelnen Strukturelementen (5) von der thermoplastischen Polymermasse (8) als Verbindungsbereiche (6) umgeben und zusammengehalten werden,
wobei die polymere Matrix der Strukturelemente (5) mit der umgebenden thermoplastischen Polymermasse (8) haftend verbunden wird,
und wobei anschliessend das Kunststoff-Formteil mit der integrierten lasttragenden Struktur (3) entformt wird.

17. Verfahren nach Anspruch 16, **dadurch gekennzeichnet, dass** die Bildung der Polymermasse (8) durch Spritzgiessen erfolgt.

18. Verfahren nach Anspruch 16 oder 17, **dadurch gekennzeichnet, dass** nach dem Entformen die wenigstens teilweise umhüllte tragende Struktur (3) in eine weitere Form eingegeben wird und in diese Form eine weitere plastische Polymermasse eingefüllt wird zur Bildung einer mehrschichtigen, die Struktur mindestens teilweise umgebende Polymermasse (8.1, 8.2).

19. Verfahren nach Anspruch 16 oder 17, **dadurch gekennzeichnet, dass** nach dem Einfüllen der plastischen Polymermasse (8.1) anschliessend das Volumen derselben Form durch verschiebbare Wandungen vergrössert wird und anschliessend eine weitere Polymermasse (8.2) in dieselbe Form eingefüllt wird zur Bildung einer mehrschichtigen, die Struktur umgebende Polymermasse.

20. Verfahren nach einem der Ansprüche 16 bis 19, **dadurch gekennzeichnet, dass** bei mehrschichtigen Strukturelementen (5) bzw. Polymermassen (8) eine gute Haftung an den Grenzflächen erzielt wird durch Adhäsion an der Grenzfläche, durch Diffusion der Moleküle beidseits der Grenzfläche ineinander, durch chemische Reaktion an der Grenzfläche, oder durch Anordnen einer haftvermittelnden Verbindungsschicht (9) zwischen Strukturelementen (5) und Polymermasse (8).

21. Verfahren nach Anspruch 16, **dadurch gekennzeichnet, dass** die einzelnen Strukturelemente (5) zur Bildung der tragenden Struktur (3) durch formschlüssige Verbindungselemente (7) wie schraubbare, steckbare, einrastbare Verbindungselemente verbunden werden.

22. Verfahren nach Anspruch 16, **dadurch gekennzeichnet, dass** die einzelnen Strukturelemente (5) durch Kleben, Verschweissen usw. kraftschlüssig miteinander verbunden werden.

23. Verfahren nach Anspruch 16, **dadurch gekennzeichnet, dass** die Verbindung der einzelnen Strukturelemente (5) zur Bildung der tragenden Struktur (3) durch Umhüllen der einzelnen Strukturelemente mittels Netzen, Bändern und dergleichen erzielt wird.

## Claims

1. Plastic moulding with a design structure with a thermoplastic polymer material (8) which is forming the moulding
and with a load-bearing structure, which is integrated into and surrounded by the thermoplastic polymer material (8), **characterized by**
a load-bearing structure (3) with a continuous fibre reinforcement,
which consists of several interconnected high strength individual structural elements (5),
said structural elements (5) comprising a continuous fibre reinforcement in a polymer matrix,
wherein all connection points of the individual structural elements (5) are surrounded and held together by the thermoplastic polymer material (8) as connecting areas (6)
and wherein the polymer matrix of the structural elements (5) is adhesively interconnected to the surrounding thermoplastic polymer material (8).

2. Moulding according to claim 1, **characterized in that** the structural elements (5) are reinforced with continuous fibres of glass, carbon, aramide, LC polymer or other high strength polymer fibres.

3. Moulding according to one of the claims 1 or 2, **characterized in that** the structural elements (5) have as the matrix material a thermoplastic such as polyamide (PA), polypropylene (PP), polyethylene terephthalate (PET), polybutylene terephthalate (PBT), polycarbonate (PC), polyimide (PI), polyacrylates, polyphenylene sulphide (PPS) or polyether ether ketone (PEEK).

4. Moulding according to one of the claims 1 or 2, **characterized in that** the structural elements (5) have as a matrix a duromer material, such as polyurethane (PUR), unsaturated polyesters, epoxy resins, phenolic resins, an amino plastic or a novolak resin.

5. Moulding according to one of the preceding claims, **characterized in that** as structural elements (5) for forming the load-bearing structure (3) use is made of longitudinally oriented structures (5.1) such as rods, pipes, bars, sections and flat structures (5.2) such as plates, laminates, honeycombs, grids, etc.

6. Moulding according to one of the preceding claims, **characterized in that** the structural elements (5) for forming the load-bearing structure (3) are interconnected by means of connecting elements (7).

7. Moulding according to one of the preceding claims, **characterized in that** the individual structural elements (5) for producing the load-bearing structure (3) are produced by extrusion, pultrusion, injection moulding or other continuous plastics-processing processes, the individual elements being formed from the continuous material by cutting, punching, milling, sawing and subsequent finishing.

8. Moulding according to one of the preceding claims, **characterized in that** the individual structural elements (5) or forming the load-bearing structure are in multilayer form with a high strength core and a connecting layer as the outermost layer, which is compatible with the polymer material (8) directly surrounding the element, so that the structural element and polymer material are firmly adhesively interconnected by the connecting layer (9).

9. Moulding according to one of the preceding claims, **characterized in that** the surface of the structural element (5) is compatible to the extent that there is a diffusion at the contact face to the surrounding polymer material (8).

10. Moulding according to one of the preceding claims, **characterized in that** the polymer material (8) has a thermoplastic polymer such as polyamide (PA), polypropylene (PP), polyethylene terephthalate (PET), polybutylene terephthalate (PBT), polycarbonate (PC), polyimide (PI), polyacrylates, polyphenylene sulphide (PPS) or polyether ether ketone (PEEK).

11. Moulding according to one of the preceding claims, **characterized in that** the polymer material (8) has a short or long fibre reinforcement.

12. Moulding according to one of the preceding claims, **characterized in that** the polymer material is in multilayer form (8.1, 8.2) with a polymer material strength and rigidity in the particular layers decreasing from the structural element (5) to the surface.

13. Moulding according to one of the preceding claims, **characterized in that** the polymer material (8) is at least partly foamed (8.0).

14. Moulding according to one of the preceding claims, **characterized in that** the polymer material (8) is at least partly dyed.

15. Moulding according to one of the preceding claims, **characterized in that** several plastic mouldings with the integrated load-bearing structures (3) are forming a vehicle frame.

16. Process for producing a plastic moulding with a design structure with a thermoplastic polymer material (8) which is forming the moulding
and with a load-bearing structure (3), which consists of several high strength individual structural elements (5),
wherein said structural elements (5) comprising a continuous fibre reinforcement in a polymer matrix are cut to size and are connected with each other
in order to form a load-bearing structure (3) with a continuous fibre reinforcement, which is inserted in a mould
and subsequently a melted thermoplastic polymer material (8) is filled into the mould
and wherein all connection points of the individual structural elements (5) are surrounded and held together by the thermoplastic polymer material (8) as connecting areas (6)
and wherein the polymer matrix of the structural elements (5) is adhesively interconnected to the surrounding thermoplastic polymer material (8)
and then the plastic moulding with the integrated load bearing structure (3) is removed from the mould.

17. Process according to claim 16, **characterized in that** the polymer material (8) is formed by extrusion.

18. Process according to claim 16 or 17, **characterized in that** after mould removal, the at least partly enveloped, load-bearing structure (3) is introduced into a further mould, into which is introduced a further plastic polymer material for forming a multilayer polymer material (8.1, 8.2) at least partly surrounding the structure.

19. Process according to claim 16 or 17, **characterized in that** after filling the plastic polymer material (8.1) the volume of the same mould is increased by displaceable walls and subsequently a further polymer material (8.2) is filled into the same mould for forming a multilayer polymer material surrounding the structure.

20. Process according to one of the claims 16 to 19, **characterized in that** in the case of multilayer structural elements (5) or polymer material (8) a good attachment is obtained at the interfaces by adhesion at the interface, by interdiffusion of the molecules on either side of the interface, by chemical reaction at the interface, or by placing a priming connecting layer (9) between the structural elements (5) and the polymer material (8).

21. Process according to claim 16, **characterized in that** for forming the load-bearing structure (3), the individual structural elements (5) are connected by positive connecting elements (7) such as screwable, pluggable and lockable connecting elements.

22. Process according to claim 16, **characterized in that** the individual structural elements (5) are non-positively interconnected by bonding, welding, etc.

23. Process according to claim 16, **characterized in that** the connection of the individual structural elements (5) for forming the load-bearing structure(3) is obtained by enveloping the individual structural elements by nets, strips, etc.

## Revendications

1. Pièce moulée en matière synthétique comprenant une structure de construction, une masse polymère (8) thermoplastique qui forme la pièce moulée, et une structure porteuse de charge, qui est intégrée dans la pièce moulée et est entourée par la masse polymère (8) thermoplastique, **caractérisée par** une structure (3) porteuse de charge avec un renfort de fibres continues, qui se composent de plusieurs éléments de structure (5) individuels, reliés entre eux et très résistants, lesquels éléments de structure (5) présentent un renfort de fibre continue dans une matrice polymère, tous les points de liaison étant entourés et maintenus ensemble entre les éléments de structure (5) individuels par la masse polymère (8) thermoplastique comme zone de liaison (6) et la matrice polymère des éléments de structure (5) étant reliée de façon adhésive à la masse polymère (8) thermoplastique et enveloppante.

2. Pièce moulée selon la revendication 1, **caractérisée en ce que** les éléments de structure (5) sont renforcés avec des fibres continues à base de verre, de carbone, d'aramide, de polymère LC ou d'autres fibres polymères très résistantes.

3. Pièce moulée selon l'une quelconque des revendications 1 ou 2, **caractérisée en ce que** les éléments de structure (5) présentent un thermoplastique comme matériau de matrice, tel que du polyamide (PA), du polypropylène (PP), du polyéthylène-théréphtalate (PET), du polybutylène-théréphtalate (PBT), du polycarbonate (PC), du polyimide (PI), des polyacrylates, du sulfure de polyphénylène (PPS), du polyétheréthercétone (PEEK).

4. Pièce moulée selon l'une quelconque des revendications 1 ou 2, **caractérisée en ce que** les éléments de structure (5) présentent un matériau duromère comme matrice, tel que du polyuréthanne PUR, du polyester non saturé, des résines époxy, des résines phénoliques, un aminoplaste ou une novolaque.

5. Pièce moulée selon l'une quelconque des revendications précédentes, **caractérisée en ce que** des produits orientés dans le sens longitudinal (5.1) comme des tiges, des tuyaux, des barres, des profilés et des produits plats (5.2) comme des plaques, des agglomérés laminés, des nids d'abeille, des grilles, etc. sont utilisés comme éléments de structure (5) pour la formation de la structure (3) portante.

6. Pièce moulée selon l'une quelconque des revendications précédentes, **caractérisée en ce que** les éléments de structure (5) sont reliés entre eux au moyen d'éléments de liaison (7) pour la formation de la structure (3) portante.

7. Pièce moulée selon l'une quelconque des revendications précédentes, **caractérisée en ce que** les éléments de structure (5) individuels pour la fabrication de la structure (3) portante sont fabriqués par extrusion, pultrusion, coulée continue ou d'autres procédés continus de transformation des matières plastiques, les éléments individuels étant fabriqués à partir du matériau continu par découpage, estampage, fraisage, sciage et reprise ultérieure.

8. Pièce moulée selon l'une quelconque des revendications précédentes, **caractérisée en ce que** les éléments de structure (5) individuels pour la formation de la structure portante sont conçus avec plusieurs couches avec un élément central très résistant et une couche de liaison comme couche la plus extérieure, qui est compatible avec la masse polymère (8) entourant directement l'élément, de sorte que l'élément de structure et la masse polymère sont reliés entre eux par adhérence par la couche de liaison (9).

9. Pièce moulée selon l'une quelconque des revendications précédentes, **caractérisée en ce que** la surface de l'élément de structure (5) est suffisamment compatible pour qu'on ait une diffusion sur la surface de contact avec la masse polymère (8) environnante.

10. Pièce moulée selon l'une quelconque des revendications précédentes, **caractérisée en ce que** la masse polymère (8) présente un polymère thermoplastique comme une polyamide (PA), du polypropylène (PP), du polyéthylène-théréphtalate (PET), du polybutylène-théréphtalate (PBT), du polycarbonate (PC), du polyimide (PI), des polyacrylates, du sulfure de polyphénylène (PPS), du polyétheréthercétone (PEEK).

11. Pièce moulée selon l'une quelconque des revendications précédentes, **caractérisée en ce que** la masse polymère (8) présente un renfort de fibre courte ou de fibre longue.

12. Pièce moulée selon l'une quelconque des revendications précédentes, **caractérisée en ce que** la masse polymère est conçue avec plusieurs couches (8.1, 8.2) avec une solidité et une rigidité du matériau polymère dans les couches respectives qui diminuent de l'élément de structure (5) vers la surface.

13. Pièce moulée selon l'une quelconque des revendications précédentes, **caractérisée en ce que** la masse polymère (8) est au moins partiellement moussée (8.0).

14. Pièce moulée selon l'une quelconque des revendications précédentes, **caractérisée en ce que** la masse polymère (8) est au moins partiellement teintée à l'intérieur.

15. Pièce moulée selon l'une quelconque des revendications précédentes, **caractérisée en ce que** plusieurs pièces moulées en matière synthétique forment une cellule de véhicule (41) avec les structures (3) porteuses de charges et intégrées.

16. Procédé pour la fabrication d'une pièce moulée en matière synthétique avec une structure de construction, avec une masse polymère (8) thermoplastique, qui forme la pièce moulée, et avec une structure (3) porteuse de charge et comprenant plusieurs éléments de structure (5) individuels et très résistants, les éléments de structure (5), qui présentent un renfort de fibre continue dans une matrice polymère, étant coupés aux dimensions et ensuite reliés entre eux, de sorte qu'une structure (3) porteuse de charge est renforcée de fibres continues et formée, laquelle est insérée dans un moule, polymère (8) thermoplastique et fondue est versée ensuite dans le moule et tous les points de liaison entre les éléments de structure (5) individuels étant entourés et maintenus ensemble par la masse polymère (8) thermoplastique comme zones de liaison (6), la matrice polymère des éléments de structure (5) étant reliée par adhérence à la masse polymère (8) thermoplastique enveloppante, et la pièce moulée en plastique avec la structure (3) porteuse de charge et intégrée étant démoulée ensuite.

17. Procédé selon la revendication 16, **caractérisé en ce que** la formation de la masse polymère (8) s'effectue par moulage par injection.

18. Procédé selon la revendication 16 ou 17, **caractérisé en ce que**, après le démoulage, la structure (3) portante et au moins partiellement enveloppée est introduite dans un autre moule et une autre masse polymère plastique est versée dans ce moule pour la formation d'une masse polymère (8.1, 8.2) à plusieurs couches et entourant au moins partiellement la structure.

19. Procédé selon la revendication 16 ou 17, **caractérisé en ce que**, après le versement de la masse polymère (8.1), le volume du même moule est ensuite augmenté par des parois coulissantes et une autre masse polymère (8.2) est versée ensuite dans le même moule pour la formation d'une masse polymère à plusieurs couches et entourant la structure.

20. Procédé selon l'une quelconque des revendications 16 à 19, **caractérisé en ce que**, avec des éléments de structure (5) ou masses polymères (8) à plusieurs couches, on obtient une bonne adhérence sur les surfaces limites par adhésion sur la surface limite, par diffusion des molécules des deux côtés de la surface limite les unes dans les autres par réaction chimique sur la surface limite ou par placement d'une couche de liaison (9) d'adhérence entre des éléments de structure (5) et la masse polymère (8).

21. Procédé selon la revendication 16, **caractérisé en ce que** les éléments de structure (5) individuels sont reliés pour la formation de la structure (3) portante par des éléments de liaison (7) complémentaires au niveau de la forme tels que des éléments de liaison vissables, enfichables et encliquetables.

22. Procédé selon la revendication 16, **caractérisé en ce que** les éléments de structure (5) individuels sont reliés entre eux par une liaison fonctionnant sous l'action d'une force entraînée par adhérence par collage, soudage, etc.

23. Procédé selon la revendication 16, **caractérisé en ce que** la liaison des éléments de structure (5) individuels pour la formation de la structure (3) portante est obtenue par enveloppement des éléments de structure individuels au moyen de filets, de bandes et similaires.
